# EUROPÄISCHE PATENTSCHRIFT

(11) **EP 3 830 452 B1**
(45) Veröffentlichungstag und Bekanntmachung des Hinweises auf die Patenterteilung: **07.09.2022**
(21) Anmeldenummer: 19739575.9
(22) Anmeldetag: 10.07.2019
(51) Int. Cl.: F16H 61/28

(54) **SCHALTMECHANISMUS FÜR EIN GETRIEBE**
GEAR-SHIFTING DEVICE FOR A TRANSMISSION
MÉCANISME DE PASSAGE DE VITESSE POUR UNE BOÎTE DE VITESSES

(30) Priorität: 30.07.2018 DE 102018212694
(43) Veröffentlichungstag der Anmeldung: 09.06.2021
(73) Patentinhaber: KNORR-BREMSE Systeme für Nutzfahrzeuge GmbH, 80809 München (DE)
(72) Erfinder: SCHALLER, Sebastian, 86462 Langweid (DE); KRAL, Martin, 80997 München (DE); SCHUDY, Jürgen, 85256 Vierkirchen (DE)
(86) Internationale Anmeldenummer: PCT/EP2019/068602
(87) Internationale Veröffentlichungsnummer: WO 2020/025280

(56) Entgegenhaltungen:
- EP-A2- 0 828 099
- DE-A1- 10 052 607
- DE-A1- 10 213 724
- DE-A1-102013 018 872
- DE-T2- 60 301 892
- US-A- 5 251 503

## Beschreibung

Die Erfindung betrifft einen Schaltmechanismus für ein Getriebe, insbesondere einen Schaltmechanismus für ein Schaltgetriebe eines Fahrzeugs.

Es sind Schaltmechanismen für Getriebe bekannt, die eine Gassenwahl in einem Schaltgetriebe ausführen, um über spezifische Schaltgabeln Getriebebauteile, beispielsweise Zahnräder oder Mitnehmer, für ein Schalten von Gängen verschieben. Üblicherweise sind die Schaltgassen in einer Richtung parallel zu Getriebewellen des Getriebes nebeneinander angeordnet und sind parallel zueinander. Aufgrund der heutigen Konstruktion von Fahrzeugen, insbesondere von Nutzfahrzeugen, ist es nicht mehr, wie früher, zweckdienlich, die Schaltgasse über ein Hin- und Her-Bewegen eines Schalthebels zu wählen. Aus diesem Grund werden Gassenwahlaktuatoren eingesetzt, um die gewünschte Schaltgasse zu wählen.

Da, wie o.a., die Schaltgassen in Richtung der Getriebewellen parallel zueinander angeordnet sind, ist, wie beispielsweise in einem Ausführungsbeispiel in dem Dokument DE 102 13 724 A1 gezeigt, der Gassenwahlaktuator senkrecht zu der Richtung der Getriebewellen angeordnet. Dies verbraucht aber einen großen Bauraum, der, insbesondere in Anbetracht von einer zunehmenden Anzahl von Baugruppen und Bauteilen, immer knapper wird.

Dokument DE 10 2013 018 872 A1 offenbart einen Schaltmechanismus für ein Getriebe mit einer Schaltbetätigungseinheit und einer Wähleinheit mit einem Umschaltaktuator zum Wählen der Schaltgasse, wobei eine Umschaltaktuatorachse und eine Schaltbetätigungsachse parallel zueinander ausgerichtet sind.

In Dokument EP 0 828 099 A2 ist eine Umwandlungseinheit mit einem Drehantrieb zum Umwandeln einer Linearbewegung eines solchen Umschaltaktuators in eine Drehbewegung eines Wählelements der Wähleinheit vorgesehen.

Dokument US 5 251 503 A offenbart eine elektromechanische Steuerung für einen Getriebewähler in einem synchronisierten Vorgelegewellengetriebe. Diese umfasst eine Schaltwelle, die durch einen Kraftaktuatormechanismus linear und drehbar angetrieben wird, um eine Gangwahl innerhalb des Vorgelegewellengetriebes bereitzustellen.

Der Erfindung liegt also die Aufgabe zugrunde, einen Schaltmechanismus und ein Verfahren zum Schalten für ein Getriebe bereitzustellen, die den obigen Nachteil ausräumen, wobei der Schaltmechanismus unabhängig von einem Schalthebel angeordnet ist und eine kompakte Bauweise hat.

Die Aufgabe wird durch einen Schaltmechanismus gemäß Anspruch 1 und ein Verfahren gemäß Anspruch 8 gelöst. Vorteilhafte Weiterbildungen der Erfindung sind Gegenstand der abhängigen Ansprüche.

Gemäß einem Aspekt der Erfindung weist ein Schaltmechanismus für ein Getriebe eine Schaltbetätigungseinheit auf, die ihrerseits einen Schaltbetätigungsaktuator aufweist, der entlang einer Schaltbetätigungsachse bewegbar ist. Der Schaltmechanismus weist ferner eine Wähleinheit auf, die mit dem Schaltbetätigungsaktuator verbindbar ist. Die Wähleinheit enthält ein Wählelement zum Wählen einer Schaltgasse eines Getriebes, wobei das Wählelement dazu ausgebildet ist, in einer Richtung nicht parallel zu der Schaltbetätigungsachse unterschiedliche Stellungen einzunehmen, um in den unterschiedlichen Stellungen. mit unterschiedlichen Schaltgabeln zum Verschieben von Getriebebauteilen für ein Schalten von Gängen verbindbar zu sein. Ferner enthält die Wähleinheit einen Umschaltaktuator mit einer Umschaltaktuatorachse, die eine Umschaltbewegung des Umschaltaktuators, um das Wählelement zum Wählen der Schaltgasse des Getriebes in die unterschiedlichen Stellungen zu bewegen, definiert. Die Umschaltaktuatorachse und die Schaltbetätigungsachse sind parallel zueinander ausgerichtet.

Durch diese parallele Anordnung der Umschaltaktuatorachse und der Schaltbetätigungsachse, die gegebenenfalls auch nebeneinander liegen können, hat der Schaltmechanismus eine kompakte Bauform und kann trotzdem unabhängig von einem Schalthebel angeordnet werden.

Zudem ist das Wählelement ausgebildet ist, in den unterschiedlichen Stellungen eine Schaltstange des Getriebes mit den unterschiedlichen Schaltgabeln axial verschiebbar zu koppeln.

Durch die Kopplung der Schaltstange mit den unterschiedlichen Schaltgabeln ist es möglich, für ein wahlweises Verschieben von den mehreren Schaltgabeln eine verringerte Anzahl von Schaltstangen oder lediglich eine Schaltstange zu verwenden. Dadurch wird ein erforderlicher Bauraum weiter verringert.

Des Weiteren weist der Schaltmechanismus einen Drehantrieb auf, der mit dem Wählelement verbindbar ist, um das Wählelement in die unterschiedlichen Stellungen zu drehen. Der Drehantrieb weist einen Umschaltaktuator auf, der ausgebildet ist, eine Linearbewegung entlang der Umschaltaktuatorachse zu erzeugen, sowie eine Umwandlungseinheit, die mit dem Umschaltaktuator verbindbar ist, und die ausgebildet ist, die Linearbewegung des Umschaltaktuators in eine Drehbewegung des Drehelements um eine Drehachse der Umwandlungseinheit umzuwandeln.

Durch diese Anordnung kann die Linearbewegung des einfach und exakt ansteuerbaren Umschaltaktuators in die unterschiedlichen Stellungen des Wählelements umgewandelt werden.

In einer vorteilhaften Weiterentwicklung weist die Umwandlungseinheit eine Kulisse auf, die ausgebildet ist, Gewindegang-artig um die Drehachse zu verlaufen, und die mit dem Umschaltaktuator verbindbar ist. Die Kulisse schließt gegenüber der Drehachse der Umwandlungseinheit einen vorbestimmten Steigungswinkel ein und ist um die Drehachse bezüglich der Umwandlungseinheit unverdrehbar angeordnet. Ferner weist die Umwandlungseinheit einen Eingriffsabschnitt auf, der ausgebildet ist, in die Kulisse einzugreifen, wobei die Umwandlungseinheit eine Lagerstelle aufweist, die ausgebildet ist, den Eingriffsabschnitt um die Drehachse drehbar zu lagern. Der Eingriffsabschnitt ist mit dem Wählelement so verbindbar, dass eine lineare Bewegung der Kulisse in eine Drehbewegung des Wählelements umwandelbar ist.

Durch das Vorsehen der Kulisse in Verbindung mit dem Eingriffsabschnitt ist eine genaue Zuordnung der Drehbewegung zu der Linearbewegung möglich, sodass eine exakte Gassenwahl einfach möglich ist.

In einer weiteren vorteilhaften Ausgestaltung ist der Steigungswinkel so ausgebildet, dass er einem Steilgewinde entspricht, so dass die Kulisse und der Eingriffsabschnitt eine Verbindung aufweisen, die ausgebildet ist, nicht-selbsthemmend zu sein, so dass der Eingriffsabschnitt durch die lineare Bewegung der Kulisse verdrehbar ist.

Durch eine entsprechend geeignete Festlegung des Steigungswinkels ist eine kraftsparende Ansteuerung möglich, so dass der Umschaltaktuator mit einer geringeren Leistungsabgabe konzipiert werden kann und daher wiederum, aufgrund einer geringeren Baugröße des Umschaltaktuators, Bauraum eingespart werden kann.

In einer vorteilhaften Weiterbildung weist die Umwandlungseinheit eine Schaltwalze auf, und die Kulisse ist am Umfang der Schaltwalze vorgesehen.

Durch das Vorsehen der Schaltwalze ist die Kulisse einfach und kostengünstig bereitzustellen.

Wenn der Schaltmechanismus einen hydraulisch-betätigbaren Umschaltaktuator, einen pneumatisch-betätigbaren Umschaltaktuator oder einen elektrisch-betätigbaren Umschaltaktuator aufweist, kann der Schaltmechanismus jeweils einfach und/oder kostengünstig angesteuert werden und die Aktuatorantriebsart je nach Anwendungsfall geeignet ausgewählt werden.

Gemäß einem weiteren Aspekt der Erfindung weist ein Verfahren zum Schalten eines Gangs in einem Getriebe mit dem erfindungsgemäßen Schaltmechanismus die folgenden Schritte auf:
Aktivieren des Umschaltaktuators mit der Umschaltaktuatorachse, die parallel zu der Schaltbetätigungsachse angeordnet ist, zum Verändern einer Stellung des Wählelements in einer Richtung nicht parallel zu der Umschaltaktuatorachse, sodass eine Schaltstange über den Hebelmechanismus so verdreht wird, dass sie mit einer spezifischen Schaltgabel axial verschiebbar gekoppelt wird; und Aktivieren der Schaltbetätigungseinheit, um über die spezifische Schaltgabel eine Gang-spezifische Verbindung innerhalb des Getriebes herzustellen.

Durch die Kopplung der Schaltstange mit den unterschiedlichen Schaltgabeln ist es möglich, für ein wahlweises Verschieben von den mehreren Schalgabeln eine verringerte Anzahl von Schaltstangen oder lediglich eine Schaltstange zu verwenden. Dadurch wird ein erforderlicher Bauraum weiter verringert.

Dabei erfolgt das Verändern der Stellung des Wählelements durch Ansteuern eines Umschaltaktuators, der eine Linearbewegung erzeugt, mit einer Umwandlungseinheit zum Erzeugen einer Drehbewegung eines Drehantriebs, um das Wählelement in die unterschiedlichen Stellungen zu drehen.

Durch dieses Verfahren kann die Linearbewegung des Umschaltaktuators einfach und exakt in die unterschiedlichen Stellungen des Wählelements umgewandelt werden, da die Umwandlungseinheit einfach aufgebaut ist und entsprechend den Genauigkeitsanforderungen angepasst werden kann.

In einer weiteren vorteilhaften Ausgestaltung wird eine lineare Bewegung eines Aktuators des Linearantriebs über eine Kulisse und ein Eingriffselement in die Drehbewegung umgewandelt.

Hierbei ist durch das Vorsehen der Kulisse in Verbindung mit dem Eingriffsabschnitt eine genaue Zuordnung der Drehbewegung zu der Linearbewegung möglich, da ein Steigungswinkel der Kulisse entsprechend den Anforderungen gewählt werden kann, sodass eine exakte Gassenwahl möglich ist.

Die Erfindung wird nun anhand einer Ausführungsform unter Bezugnahme auf die beigefügte Zeichnung erläutert.

Insbesondere zeigt
- Fig. 1: eine Ausführungsform eines Schaltmechanismus' gemäß der Erfindung; und
- Fig. 2: ein Ablaufdiagramm eines erfindungsgemäßen Verfahrens.

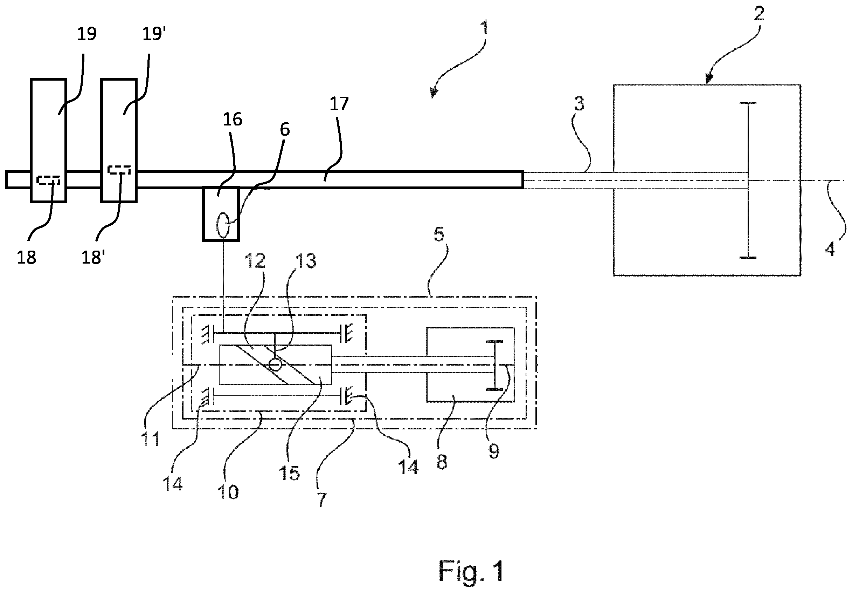

**Fig. 1** zeigt eine Ausführungsform eines Schaltmechanismus' 1 der Erfindung. Der Schaltmechanismus 1 weist eine Schaltbetätigungseinheit 2 auf, die wiederum einen Schaltbetätigungsaktuator 3 aufweist, der entlang einer Schaltbetätigungsachse 4 bewegbar ist.

Der Schaltmechanismus 1 weist ferner eine Wähleinheit 5 auf. Die Wähleinheit 5 weist ein Wählelement 6 auf, das ausgebildet ist, in einer Richtung nicht parallel zu der Schaltbetätigungsachse 4, also beispielsweise in einer Richtung im rechten Winkel zu der Schaltbetätigungsachse 4, also senkrecht zu der Schaltbetätigungsachse 4, unterschiedliche Stellungen einzunehmen. Dabei ist das Wählelement 6 in den unterschiedlichen Stellungen mit unterschiedlichen Schaltgabeln 19, 19' zum Verschieben von Getriebebauteilen für ein Schalten von Gängen verbindbar. Durch das Wählelement 6 wird über einen Hebelmechanismus 16 eine Schaltstange 17 verdreht. Über Nocken 18, 18' auf der Schaltstange 17 und komplementäre Aussparungen in den Schaltgabeln 19, 19' werden - je nach Position des Wählelements 6 und damit eines Drehwinkels der Schaltstange 17 - entsprechende Schaltgabeln 19, 19' axial verschiebbar gekoppelt oder entkoppelt. In nicht beanspruchten Ausführungsformen kann das Wählelement 6 auf eine andere Weise mit den Schaltgabeln 19, 19' verbindbar sein. Beispielsweise greift das Wählelement 6 jeweils in einen Mitnehmer von Schaltstangen in unterschiedlichen Schaltgassen, die jeweils mit einer Schaltgabel 19, 19' verbunden sind, ein.

Der Schaltmechanismus 1 weist darüber hinaus einen Drehantrieb 7 auf, der mit dem Wählelement 6 verbindbar ist, um das Wählelement 6 in die unterschiedlichen Stellungen zu drehen.

Der Drehantrieb 7 weist wiederum einen Umschaltaktuator 8 auf, der ausgebildet ist, eine Linearbewegung entlang einer Umschaltaktuatorachse 9 zu erzeugen. Ferner weist der Drehantrieb 7 eine Umwandlungseinheit 10 auf, die mit dem Umschaltaktuator 9 verbunden ist. Die Umwandlungseinheit 10 wandelt die Linearbewegung des Umschaltaktuators 8 in eine Drehbewegung des Wählelements 6 um eine Drehachse 11 der Umwandlungseinheit 10 um.

Die Umwandlungseinheit 10 ist mit einer Kulisse 12 versehen, die ausgebildet ist, Gewindegang-artig um die Drehachse 11 zu verlaufen. Die Kulisse 12 ist mit dem Umschaltaktuator 8 verbunden, wobei die Kulisse 12 gegenüber der Drehachse 11 einen vorbestimmten Steigungswinkel α aufweist und um die Drehachse 11 der Umwandlungseinheit 10 bezüglich der Umwandlungseinheit 10 unverdrehbar angeordnet ist. Die Kulisse 12 ist am Umfang einer Schaltwalze 15 vorgesehen. Alternativ ist die Kulisse 12 nicht an der Schaltwalze 15 vorgesehen, sondern ein anderer geometrischer Körper enthält die Kulisse 12.

Die Umwandlungseinheit 10 ist ferner mit einem Eingriffsabschnitt 13 versehen, der ausgebildet ist, in die Kulisse 12 einzugreifen. Die Umwandlungseinheit 10 weist außerdem eine Lagerstelle 14 auf, die ausgebildet ist, den Eingriffsabschnitt 13 um die Drehachse 11 drehbar zu lagern. Der Eingriffsabschnitt 13 ist mit einem Wählelement 6 so verbunden, dass eine lineare Bewegung der Kulisse 12 entlang der Umschaltaktuatorachse 9 in eine Drehbewegung des Wählelements 6 umgewandelt wird.

Der oben genannte Steigungswinkel α ist so ausgebildet, dass er einem Steilgewinde entspricht, so dass die Kulisse 12 und der Eingriffsabschnitt 13 eine Verbindung aufweisen, die ausgebildet ist, nicht-selbsthemmend zu sein, so dass der Eingriffsabschnitt 13 durch die lineare Bewegung der Kulisse 12 verdrehbar ist. Alternativ sind die Kulisse 12 und der Eingriffsabschnitt 13 nicht vorgesehen, sondern alternativ ist ein Kurvengetriebe vorgesehen, um die Linearbewegung des Umschaltaktuators 8 in die Drehbewegung des Wählelements 6 umzuwandeln.

In einer alternativen, nicht beanspruchten Ausführungsform weist der Schaltmechanismus 1 keinen Drehantrieb 7 auf, der das Wählelement 6 in die unterschiedlichen Stellungen dreht, sondern eine Transformationseinheit, die eine Drehbewegung des Umschaltaktuators 8 um die Umschaltaktuatorachse 9 in eine Bewegung des Wählelements 6 in einer Richtung nicht parallel zu der Schaltbetätigungsachse 4 transformiert. In einer weiteren alternativen, nicht beanspruchten Ausführungsform ist auch keine Transformationseinheit vorgesehen, sondern das Wählelement 6 ist direkt mit dem Umschaltaktuator 8, der das Wählelement 6 dann in einer Richtung nicht parallel zu der Schaltbetätigungsachse 4 in die unterschiedlichen Stellungen dreht, verbunden. Die Umschaltaktuatorachse 9 definiert jedoch in allen Fällen die Umschaltbewegung, nämlich entweder die Linearbewegung entlang der Umschaltaktuatorachse 9 oder die Drehbewegung um die Umschaltaktuatorachse 9. Die Umschaltaktuatorachse 9 und die Schaltbetätigungsachse 4 sind in allen Fällen parallel zueinander ausgerichtet.

Der Umschaltaktuator 8 ist als ein elektrisch-betätigbarer Umschaltaktuator 8 ausgeführt. Alternativ kann auch ein hydraulisch-betätigbarer Umschaltaktuator 8 oder ein pneumatisch-betätigbarer Umschaltaktuator vorgesehen sein.

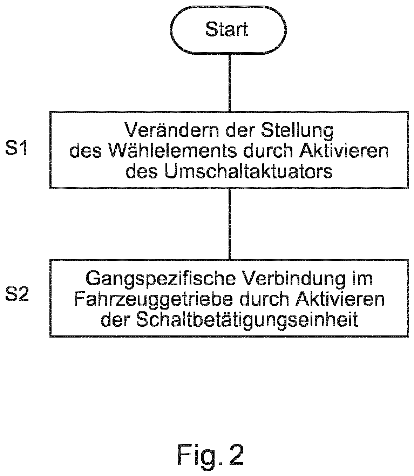

In **Fig. 2** ist ein Ablaufdiagramm eines erfindungsgemäßen Verfahrens gezeigt. Im Betrieb wird der Umschaltaktuator 8 mit der Umschaltaktuatorachse 9, die parallel zu der Schaltbetätigungsachse 4 ausgerichtet ist, zum Verändern einer Stellung des Wählelements 6 in einer Richtung nicht parallel zu der Umschaltaktuatorachse 9, in Schritt S1 aktiviert, sodass das Wählelement 6 in einer spezifischen Schaltgasse mit einer Schaltgabel 19, 19' verbunden wird. Anschließend wird in Schritt S2 die Schaltbetätigungseinheit 2 aktiviert, um über die spezifische Schaltgabel 19, 19' eine Gang-spezifische Verbindung innerhalb des Getriebes herzustellen.

Das Verändern der Stellung des Wählelements 6 erfolgt durch Ansteuern des Umschaltaktuators 8, der die Linearbewegung erzeugt, mit einer Umwandlungseinheit 10 zum Erzeugen der Drehbewegung eines Drehantriebs 7, um das Wählelement 6 in die unterschiedlichen Stellungen zu drehen. Die Linearbewegung des Umschaltaktuators 8 wird über die Kulisse 12 und das Eingriffselement 13 in die Drehbewegung umgewandelt. Alternativ wird die Linearbewegung beispielsweise über ein Kurvengetriebe in die Drehbewegung umgewandelt. In weiteren alternativen, nicht beanspruchten Ausführungsformen erfolgt ein Bewegen in die unterschiedlichen Stellungen durch eine Drehbewegung durch den Umschaltaktuator 8, die dann, ggf. über eine Transformationseinheit umgewandelt, in eine Bewegung zum Verändern einer Stellung des Wählelements 6 in einer Richtung nicht parallel zu der Umschaltaktuatorachse 9 umgewandelt wird.

### BEZUGSZEICHENLISTE

- 1: Schaltmechanismus
- 2: Schaltbetätigungseinheit
- 3: Schaltbetätigungsaktuator
- 4: Schaltbetätigungsachse
- 5: Wähleinheit
- 6: Wählelement
- 7: Drehantrieb
- 8: Umschaltaktuator
- 9: Umschaltaktuatorachse
- 10: Umwandlungseinheit
- 11: Drehachse
- 12: Kulisse
- 13: Eingriffsabschnitt
- 14: Lagerstelle
- 15: Schaltwalze
- 16: Hebelmechanismus
- 17: Schaltstange
- 18, 18': Nocke
- 19, 19': Schaltgabel

## Patentansprüche

1. Schaltmechanismus (1) für ein Getriebe, aufweisend:
eine Schaltbetätigungseinheit (2), die einen Schaltbetätigungsaktuator (3) aufweist, der entlang einer Schaltbetätigungsachse (4) bewegbar ist, um in einer spezifischen Schaltgasse über eine spezifische Schaltgabel (19, 19') eine Gang-spezifische Verbindung innerhalb des Getriebes herzustellen, und
eine Wähleinheit (5), die mit dem Schaltbetätigungsaktuator (3) verbindbar ist, wobei
die Wähleinheit (5) aufweist:
ein Wählelement (6) zum Wählen einer spezifischen Schaltgasse des Getriebes, wobei das Wählelement (6) dazu ausgebildet ist, in einer Richtung nicht parallel zu der Schaltbetätigungsachse (4) unterschiedliche Stellungen einzunehmen, um in den unterschiedlichen Stellungen mit unterschiedlichen Schaltgabeln (19, 19') zum Verschieben von Getriebebauteilen für ein Schalten von Gängen verbindbar zu sein und
einen Umschaltaktuator (8) mit einer Umschaltaktuatorachse (9), die eine Umschaltbewegung des Umschaltaktuators (8), um das Wählelement zum Wählen der Schaltgasse des Getriebes (6) in die unterschiedlichen Stellungen zu bewegen, definiert, wobei
die Umschaltaktuatorachse (9) und die Schaltbetätigungsachse (4) parallel zueinander ausgerichtet sind,
wobei das Wählelement (6) ausgebildet ist, in den unterschiedlichen Stellungen eine mit dem Schaltbetätigungsaktuator (3) wirkverbundene Schaltstange (17) des Getriebes mit den unterschiedlichen Schaltgabeln (19, 19') axial verschiebbar zu koppeln,
der Schaltmechanismus (1) einen Drehantrieb (7) aufweist, der mit dem Wählelement (6) verbindbar ist, um das Wählelement (6) in die unterschiedlichen Stellungen zu drehen, wobei
der Drehantrieb (7) aufweist:
den Umschaltaktuator (8), der ausgebildet ist, eine Linearbewegung entlang der Umschaltaktuatorachse (9) zu erzeugen, und
eine Umwandlungseinheit (10), die mit dem Umschaltaktuator (8) verbindbar ist, und die ausgebildet ist, die Linearbewegung des Umschaltaktuators (8) in eine Drehbewegung des Wählelements (6) um eine Drehachse (11) der Umwandlungseinheit (10) umzuwandeln,
**dadurch gekennzeichnet, dass**
das Wählelement (6) dazu ausgebildet ist, die Schaltstange (17) über einen Hebelmechanismus (16) zu verdrehen, wobei
über Nocken (18, 18') auf der Schaltstange (17) und komplementäre Aussparungen in den Schaltgabeln (19, 19') je nach Position des Wählelements (6) und damit eines Drehwinkels der Schaltstange (17) die entsprechende Schaltgabel (19, 19') axial verschiebbar koppel- oder entkoppelbar ist.

2. Schaltmechanismus (1) gemäß Anspruch 1, wobei
die Umwandlungseinheit (10) aufweist:
eine Kulisse (12), die ausgebildet ist, Gewindegang-artig um die Drehachse (11) der Umwandlungseinheit (10) zu verlaufen, und die mit dem Umschaltaktuator (8) verbindbar ist, wobei die Kulisse (12) gegenüber der Drehachse (11) einen vorbestimmten Steigungswinkel (a) aufweist und bezüglich der Umwandlungseinheit (10) um die Drehachse (11) unverdrehbar angeordnet ist, und
einen Eingriffsabschnitt (13), der mit dem Wählelement (6) verbindbar ist, wobei der Eingriffsabschnitt (13) ausgebildet ist, in die Kulisse (12) einzugreifen,
eine Lagerstelle (14), die ausgebildet ist, den Eingriffsabschnitt (13) um die Drehachse (11) drehbar zu lagern, wobei
der Eingriffsabschnitt (13) mit dem Wählelement (6) so verbindbar ist, dass eine lineare Bewegung der Kulisse (12) entlang der Umschaltaktuatorachse (9) in eine Drehbewegung des Wählelements (6) um die Drehachse (11) umwandelbar ist.

3. Schaltmechanismus (1) gemäß Anspruch 2, wobei
der Steigungswinkel (a) so ausgebildet ist, dass er einem Steilgewinde entspricht, so dass die Kulisse (12) und der Eingriffsabschnitt (13) eine Verbindung aufweisen, die ausgebildet ist, nicht-selbsthemmend zu sein, so dass der Eingriffsabschnitt (13) durch die lineare Bewegung der Kulisse (12) um die Drehachse (11) verdrehbar ist.

4. Schaltmechanismus (1) gemäß Anspruch 2 oder 3, wobei
die Umwandlungseinheit (10) eine Schaltwalze (15) aufweist, und die Kulisse (12) am Umfang der Schaltwalze (15) vorgesehen ist.

5. Schaltmechanismus (1) gemäß einem der Ansprüche 1 bis 4, wobei der Umschaltaktuator (8) als hydraulisch-betätigbarer Umschaltaktuator (8) ausgeführt ist.

6. Schaltmechanismus (1) gemäß einem der Ansprüche 1 bis 4, wobei der Umschaltaktuator (8) als pneumatisch-betätigbarer Umschaltaktuator (8) ausgeführt ist.

7. Schaltmechanismus (1) gemäß einem der Ansprüche 1 bis 4, wobei der Umschaltaktuator (8) als elektrisch-betätigbarer Umschaltaktuator (8) ausgeführt ist.

8. Verfahren zum Schalten eines Gangs in einem Getriebe mit einem Schaltmechanismus (1) gemäß Anspruch 1 mit den Schritten:
- Aktivieren des Umschaltaktuators (8) mit der Umschaltaktuatorachse (9), die parallel zu der Schaltbetätigungsachse (4) ausgerichtet ist, zum Verändern einer Stellung des Wählelements (6) in einer Richtung nicht parallel zu der Umschaltaktuatorachse (9), sodass die Schaltstange (17) über den Hebelmechanismus (16) so verdreht wird, dass sie mit einer spezifischen Schaltgabel (19, 19') axial verschiebbar gekoppelt wird,
wobei das Verändern der Stellung des Wählelements (6) durch Ansteuern des Umschaltaktuators (8), der eine Linearbewegung erzeugt, mit einer Umwandlungseinheit (10) zum Erzeugen einer Drehbewegung eines Drehantriebs (7), um das Wählelement (6) in die unterschiedlichen Stellungen zu drehen, erfolgt; und
- Aktivieren der Schaltbetätigungseinheit (2), um über die spezifische Schaltgabel (19, 19') eine Gang-spezifische Verbindung innerhalb des Getriebes herzustellen.

## Claims

1. Shifting mechanism (1) for a gearbox, having:
a shift activation unit (2) which has a shift activation actuator (3) which is movable along a shift activation axis (4) in order to establish s gear-specific connection within the gearbox in a specific shift gate by way of a specific shift fork (19, 19'), and
a selector unit (5) which is connectable to the shift activation actuator (3), wherein
the selector unit (5) has:
a selector element (6) for selecting a specific shift gate of the gearbox, wherein, in a direction that is not parallel to the shift activation axis (4), the selector element (6) is configured to assume different positions so as to be connectable in the different positions to different shift forks (19, 19') for displacing gearbox components for shifting of gears, and
a switchover actuator (8) having a switchover actuator axis (9) which defines a switchover movement of the switchover actuator (8) to move the selector element (6) into the different positions, wherein
the switchover actuator axis (9) and the shift activation axis (4) are aligned so as to be mutually parallel,
wherein the selector element (6) is configured in the different positions to couple a shift rod (17) of the gearbox in operative connection with shift activation actuator (3) to the different shift forks (19, 19') in an axially displaceable manner,
wherein the gear-shifting mechanism (1) has a rotary drive (7) which is connectable to the selector element (6) in order to rotate the selector element (6) into the different positions, wherein
the rotary drive (7) has:
the switchover actuator (8), which is configured to generate a linear movement along the switchover actuator axis (9), and
a converter unit (10) which is connectable to the switchover actuator (8) and is configured to convert the linear movement of the switchover actuator (8) into a rotary movement of the selector element (6) about a rotation axis (11) of the converter unit (10),
**characterised in that**
the selector element (6) is configured to rotate the shift rod (17) by way of a lever mechanism (16), wherein
the shift fork (19, 19') can be coupled or decoupled in an axially displaceable manner by way of cams (18, 18') on the shift rod (17) and complementary clearances in the shift forks (19, 19') depending on the position of the selector element (6) and thus on a rotary angle of the shift rod (17).

2. Shifting mechanism (1) according to claim 1, wherein
the converter unit (10) has:
a gate (12) which is configured to run about the rotation axis (11) of the converter unit (10) in the manner of a thread turn and is connectable to the switchover actuator (8), wherein the gate (12) has a predetermined pitch angle (α) in relation to the rotation axis (11) and, in terms of the converter unit (10), is disposed non-rotatably about the rotation axis (11), and
an engagement portion (13) which is connectable to the selector element (6), wherein the engagement portion (13) is configured to engage with the gate guide (12),
a bearing point (14) which is configured to mount the engagement portion (13) rotatably about the rotation axis (11); wherein
the engagement portion (13) is connectable to the selector element (6) such that a linear movement of the gate (12) along the switchover actuator axis (9) can be converted to a rotary movement of the selector element (6) about the rotation axis (11).

3. Shifting mechanism (1) according to claim 2, wherein
the pitch angle (α) is configured such that it corresponds to a steep-pitch thread such that the gate (12) and the engagement portion (13) have a connection which is configured as not self-locking, and therefore the engagement portion (13) is rotatable about the rotation axis (11) by the linear movement of the gate (12).

4. Shifting mechanism (1) according to claim 2 or 3, wherein
the converter unit (10) has a shift roller (15), and the gate (12) is provided on the circumference of the shift roller (15).

5. Shifting mechanism (1) according to any of claims 1 to 4, wherein
the switchover actuator (8) is configured as a hydraulically actuable switchover actuator (8).

6. Shifting mechanism (1) according to any of claims 1 to 4, wherein
the switchover actuator (8) is configured as a pneumatically actuable switchover actuator (8).

7. Shifting mechanism (1) according to any of claims 1 to 4, wherein
the switchover actuator (8) is configured as an electrically actuable switchover actuator (8).

8. Method for shifting a gear in a gearbox having a gear-shifting mechanism (1) according claim 1, said method comprising the following steps:
- activating the switchover actuator (8) having the switchover actuator axis (9) which is oriented parallel to the shift activation axis (4), so as to vary a position of the selector element (6) in a direction not parallel to the switchover actuator axis (9) such that the shift rod (17) is rotated by way of the lever mechanism (16) in such a way that it is coupled to a specific shift fork (19, 19') in an axially displaceable manner,
wherein the change of the position of the selector element (6) is achieved by activating the switchover actuator (8) generating a linear movement a converter unit (10) for generating a rotary movement of a rotary drive in order to rotate the selector element (6) into the various positions; and
- activating the shift activation unit (2) in order to establish a gear-specific connection within the gearbox by way of the specific shift fork (19, 19').

## Revendications

1. Mécanisme (1) de passage de vitesse d'une boîte de vitesse, comportant :
une unité (2) d'actionnement de vitesse, qui a un actionneur (3) d'actionnement de vitesse, qui est mobile le long d'un axe (4) d'actionnement de vitesse, pour produire dans une voie de vitesse spécifique, par une fourche (19, 19') de vitesse spécifique, une liaison spécifique au rapport dans la boîte de vitesse, et
une unité (5) de sélection, qui peut être reliée à l'actionneur (3) d'actionnement de vitesse, dans lequel
l'unité (5) de sélection a :
un élément (6) de sélection pour la sélection d'une voie de vitesse spécifique de la boîte de vitesse, dans lequel l'élément (6) de sélection est constitué pour prendre des positions différentes, dans une direction non parallèle à l'axe (4) d'actionnement de vitesse, afin de pouvoir être relié dans les positions différentes à des fourches (19, 19') de vitesse différentes pour le déplacement de pièces de la boîte de vitesse pour un passage de rapports et
un actionneur (8) de changement comprenant un axe (9) d'actionneur de changement, qui définit un mouvement de changement de l'actionneur (8) de changement, afin de déplacer l'élément de sélection, pour la sélection de la voie de vitesse de la boîte (6) à vitesse dans les positions différentes, dans lequel
l'axe (9) d'actionneur de changement et l'axe (4) d'actionnement de vitesse sont disposés parallèlement l'un à l'autre,
dans lequel l'élément (6) de sélection est constitué pour relier à coulissement axial, dans les positions différentes, une barre (17) de vitesse, relié en action à l'actionneur (3) d'actionnement de vitesse, de la boîte de vitesse aux différentes fourches (19, 19') de vitesse,
le mécanisme (1) de passage de vitesse a une entraînement (7) en rotation, qui peut être relié à l'élément (6) de sélection, afin de mettre par rotation l'élément (6) de sélection dans les diverses positions, dans lequel
l'entraînement (7) en rotation a :
l'actionneur (8) de changement, qui est constitué pour produire un mouvement linéaire, le long de l'axe (9) d'actionneur de changement, et
une unité (10) de transformation, qui est reliée à l'actionneur (8) de changement, et qui est constituée pour transformer le mouvement linéaire de l'actionneur (8) de changement en un mouvement de rotation de l'élément (6) de sélection, autour d'un axe (11) de rotation de l'unité (10) de transformation,
**caractérisé en ce que**
l'élément (6) de sélection est constitué pour faire tourner la barre (17) de vitesse, par l'intermédiaire d'un mécanisme (16) à levier, dans lequel
par des bossages (18, 18') sur la barre (17) de vitesse et des évidements complémentaires dans les fourches (19, 19') de vitesse, suivant la position de l'élément (6) de sélection et ainsi d'un angle en rotation de la barre (17) de vitesse, la fourche (19, 19') correspondante de vitesse peut être déplacée axialement en pouvant être couplée ou découplée.

2. Mécanisme (1) de passage de vitesse suivant la revendication 1, dans lequel
l'unité (10) de transformation a :
une coulisse (12), qui est constituée à la manière d'un filetage, pour s'étendre autour de l'axe (11) de rotation de l'unité (10) de transformation, et qui peut être reliée à l'actionneur (8) de changement, dans lequel la coulisse (12) fait, avec l'axe (11) de rotation, un angle (α) d'attaque défini à l'avance, et est disposé sans pouvoir tourner, autour de l'axe (11) de rotation, par rapport à l'unité (10) de transformation, et
une partie (13) de pénétration, qui peut être reliée à l'élément (6) de sélection, dans lequel la partie (13) de pénétration est constituée pour pénétrer dans la coulisse (12),
un point (14) de montage, qui est constitué pour être monté tournant autour de l'axe (11) de rotation, dans la partie (13) de pénétration, dans lequel
la partie (13) de pénétration peut être reliée à l'élément (6) de sélection, de manière à ce qu'un mouvement linéaire de la coulisse (12), le long de l'axe (9) de l'actionneur de changement puisse être transformé en un mouvement de rotation de l'élément (6) de sélection autour de l'axe (11) de rotation.

3. Mécanisme (1) de passage de vitesse suivant la revendication 2, dans lequel l'angle (a) d'attaque est tel qu'il correspond à un filetage à pente raide, de sorte que la coulisse (12) et la partie (13) de pénétration ont une liaison, qui est constituée pour être non autobloquante, de sorte que la partie (13) de pénétration peut tourner autour de l'axe (11) de rotation par le déplacement linéaire de la coulisse (12).

4. Mécanisme (1) de passage de vitesse suivant la revendication 2 ou 3, dans lequel l'unité (10) de transformation a un rouleau (15) de vitesse et la coulisse (12) est prévue au pourtour du rouleau (15) de vitesse.

5. Mécanisme (1) de passage de vitesse suivant l'une des revendications 1 à 4, dans lequel l'actionneur (8) de changement est réalisé sous la forme d'un actionneur (8) de changement pouvant être actionné hydrauliquement.

6. Mécanisme (1) de passage de vitesse suivant l'une des revendications 1 à 4, dans lequel l'actionneur (8) de changement est réalisé sous la forme d'un actionneur (8) de changement pouvant être actionné pneumatiquement.

7. Mécanisme (1) de passage de vitesse suivant l'une des revendications 1 à 4, dans lequel l'actionneur (8) de changement est réalisé sous la forme d'un actionneur (8) de changement pouvant être actionné électriquement.

8. Procédé de passage d'une vitesse dans une boîte de vitesse comprenant un mécanisme (1) de passage de vitesse suivant la revendication 1, comprenant les stades :
- activation de l'actionneur (8) de changement par l'axe (9) d'actionneur de changement, qui est dirigé parallèlement à l'axe (4) d'actionnement de vitesse, pour modifier une position de l'élément (6) de sélection, dans une direction non parallèle à l'axe (9) de l'actionneur de changement, de sorte que la barre (17) de vitesse soit tournée par le mécanisme (16) de levier, de manière à être couplée avec possibilité de se déplacer axialement à une fourche (19, 19') de vitesse spécifique,
dans lequel la modification de la position de l'élément (6) de sélection, par commande de l'actionneur (8) de changement, qui produit un mouvement linéaire, s'effectue par une unité (10) de transformation de production d'un mouvement de rotation d'un entraînement (7) en rotation, afin de faire tourner l'élément (6) de sélection en le mettant dans les différentes positions, et
- activation de l'unité (2) d'actionnement de vitesse, pour produire, par l'intermédiaire de la fourche (19, 19') de vitesse spécifique, une liaison spécifique à un rapport dans la boîte de vitesse.
